# EUROPEAN PATENT APPLICATION

(11) **EP 2 924 920 A1**
(43) Date of publication of application: **30.09.2015**
(21) Application number: 13869151.4
(22) Date of filing: 23.12.2013
(51) Int. Cl.: H04L 12/24

(54) **SYSTEM AND METHOD FOR OPENING NETWORK CAPABILITIES, AND RELATED NETWORK ELEMENTS**

(30) Priority: 31.12.2012 CN 201210591653
(71) Applicant: Huawei Technologies Co., Ltd., Longgang District Shenzhen, Guangdong 518129 (CN)
(72) Inventor: HE, Wensheng, Shenzhen Guangdong 518129 (CN)
(74) Representative: Epping - Hermann - Fischer
(86) International application number: PCT/CN2013/090224
(87) International publication number: WO 2014/101731

(57) **Abstract**

Embodiments of the present invention provide a system and a method for opening a network capability, and a related network element, so as to meet calling, by an external application, of a capability of a network. The system includes: a network capability management network element and at least one network element, where a first interface is provided between the network capability management network element and the network element, and the network capability management network element provides a second interface for an external application; the network capability management network element is configured to acquire a capability of the network element over the first interface, and provide the capability of the network element for the external application over the second interface; and the network element is configured to provide the capability of the network element for the network capability management network element over the first interface. The method provided in the present invention helps an operator progressively upgrade a device on a network to support opening of a network capability, where the network capability can be directly obtained without involving an entity on the network, a designer of mobile applications can deeply understand the network capability of the network, and network problems that occur when a developed mobile application accesses the network can be reduced.

## Description

### TECHNICAL FIELD

The present invention relates to the field of communications, and in particular, to a system and a method for opening a network capability, and a related network element.

### BACKGROUND

After a mobile network enters an era of packet switching (Packet Switch, PS) and intelligent terminals, there is a trend that services or mobile applications based on data communication, for example, Internet services and an operator's proprietary services including video, microblog, WEB, and the like, are to replace an operator's voice communication service. For various mobile applications, data communication of a dumb pipe type cannot meet a requirement for mobile application design and also cannot meet an operator's requirement for expanding revenue.

Because carrier-class specification is required for operation security and reliability, currently, mobile networks that are operated by most operators and provide voice and data communication as main services are all in a closed state, that is, only a voice or data communication interface is provided externally to meet basic voice and data communication services. Precious resources accumulated by an operator during years of operation, such as a large amount of internal resources, device capabilities, software functions, network data, and network states, are all in a deposited state and are seldom opened externally. However, with popularization of intelligent terminals, mobile applications based on the intelligent terminals constantly spring up. Because a designer lacks an understanding of mobile networks, network problems continuously emerge. In a severe situation, service interruption even occurs on a network on a large scale.

According to analysis of the foregoing phenomena, in one aspect, in consideration of security, an operator cannot arbitrarily open deposited precious resources of a mobile network of the operator externally; in another aspect, because a designer of mobile applications cannot deeply understand or effectively use the precious resources of the mobile network, a mobile application developed by the designer inevitably has a defect. In terms of commercial benefits and resource effectiveness, an operator is willing to provide the resources of the operator for the designer of mobile applications, on a precondition that a manner for providing the resources must be secure and reliable.

Therefore, currently, how to provide deposited precious resources of a mobile network externally in a reliable and secure manner becomes an issue of common concern of operators and the mobile application industry.

### SUMMARY

Embodiments of the present invention provide a system and a method for opening a network capability, and a related network element, so as to meet calling, by an external application, of a capability of a network.

An embodiment of the present invention provides a system for opening a mobile network capability, including a network capability management network element and at least one network element, where a first interface is provided between the network capability management network element and the network element; the network capability management network element provides a second interface for the external application; the network capability management network element is configured to acquire a capability of the network element over the first interface, and provide the capability of the network element for the external application over the second interface; and the network element is configured to provide the capability of the network element for the network capability management network element over the first interface.

An embodiment of the present invention provides a network capability management network element, including a first interface, a second interface, and a processor, where the first interface is an interface over which the network capability management network element interacts with a network element; the second interface is an interface over which the network capability management network element interacts with an external application; and the processor acquires a capability of the network element over the first interface and provides the capability of the network element for the external application over the second interface.

An embodiment of the present invention provides a network element, where the network element includes a first interface and a processor, the first interface is an interface over which the network element interacts with a network capability management network element, and the processor provides a capability of the network element for the network capability management network element over the first interface.

An embodiment of the present invention provides a method for opening a network capability, including: acquiring, by a network capability management network element, a capability of a network element; and providing, by the network capability management network element, the capability of the network element for an external application.

Another embodiment of the present invention provides a method for opening a network capability, including: providing, by a network element, a capability of the network element for a network capability management network element.

According to the foregoing embodiments of the present invention, a network capability management network element acquires a capability of a network element over a first interface, and provides the capability of the network element for an external application over a second interface. According to the method provided in the embodiments of the present invention, in one aspect, a resource and a network capability of each functional entity on a network are opened to an external application, which helps an operator progressively upgrade a device on the network to support opening of the network capability, convergence of the network capability of each functional entity on the network also also helps with calling performance of the network capability, and a part of network capabilities can be directly obtained without involving the entity on the network; in another aspect, a designer of mobile applications that are beyond the network can deeply understand the network capability of the network, and network problems that occur when a developed mobile application accesses the network can be reduced.

### BRIEF DESCRIPTION OF DRAWINGS

To describe the technical solutions in the embodiments of the present invention more clearly, the following briefly introduces the accompanying drawings required for describing the prior art or the embodiments. Apparently, the accompanying drawings in the following description show merely some embodiments of the present invention, and a person skilled in the art may still derive other drawings from these accompanying drawings.
FIG. 1 is a schematic structural diagram of a system for opening a network capability according to an embodiment of the present invention;
FIG. 2 is a schematic diagram of an abstract structure corresponding to a system for opening a network capability according to an embodiment of the present invention;
FIG. 3 is a schematic flowchart of interaction between related network elements when a capability of a network element is acquired according to an embodiment of the present invention;
FIG. 4 is a schematic flowchart of interaction between related network elements when a capability of a network element is registered according to an embodiment of the present invention;
FIG. 5 is a schematic flowchart of interaction between related network elements when a capability of a network element is monitored according to an embodiment of the present invention;
FIG. 6 is a schematic structural diagram of an apparatus for opening a network capability according to an embodiment of the present invention;
FIG. 7 is a schematic structural diagram of an apparatus for opening a network capability according to another embodiment of the present invention;
FIG. 8 is a schematic structural diagram of an apparatus for opening a network capability according to another embodiment of the present invention;
FIG. 9 is a schematic structural diagram of an apparatus for opening a network capability according to another embodiment of the present invention;
FIG. 10-a is a schematic structural diagram of an apparatus for opening a network capability according to another embodiment of the present invention;

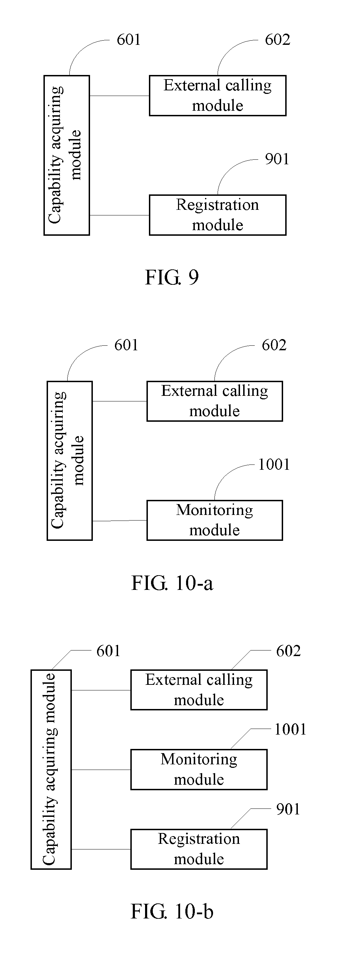

FIG. 10-b is a schematic structural diagram of an apparatus for opening a network capability according to another embodiment of the present invention;

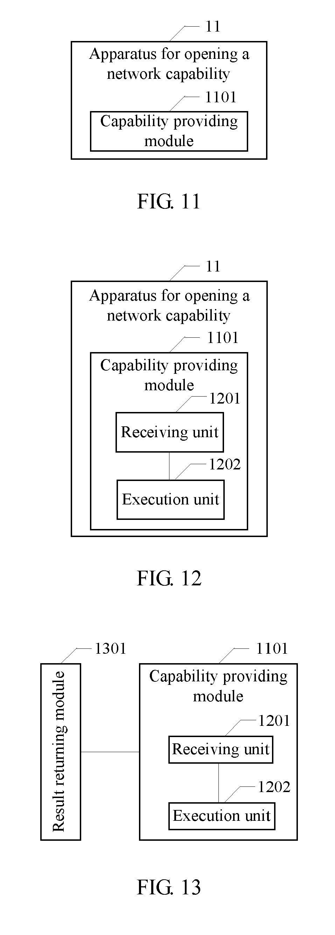

FIG. 11 is a schematic structural diagram of an apparatus for opening a network capability according to another embodiment of the present invention;
FIG. 12 is a schematic structural diagram of an apparatus for opening a network capability according to another embodiment of the present invention;
FIG. 13 is a schematic structural diagram of an apparatus for opening a network capability according to another embodiment of the present invention;

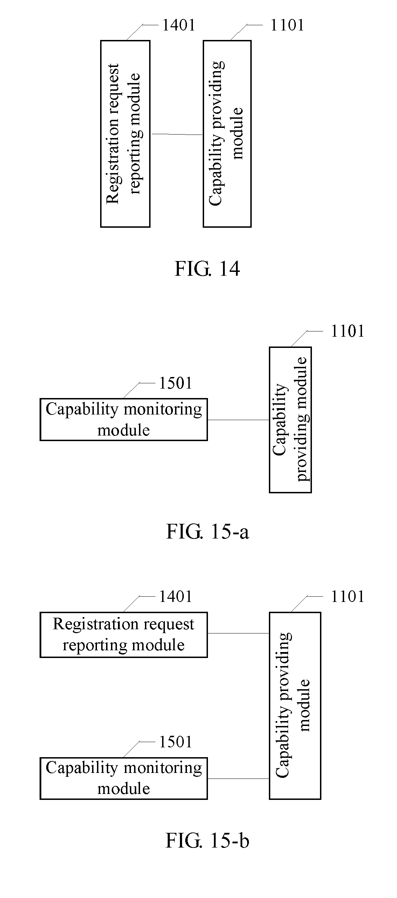

FIG. 14 is a schematic structural diagram of an apparatus for opening a network capability according to another embodiment of the present invention;
FIG. 15-a is a schematic structural diagram of an apparatus for opening a network capability according to another embodiment of the present invention;
FIG. 15-b is a schematic structural diagram of an apparatus for opening a network capability according to another embodiment of the present invention;

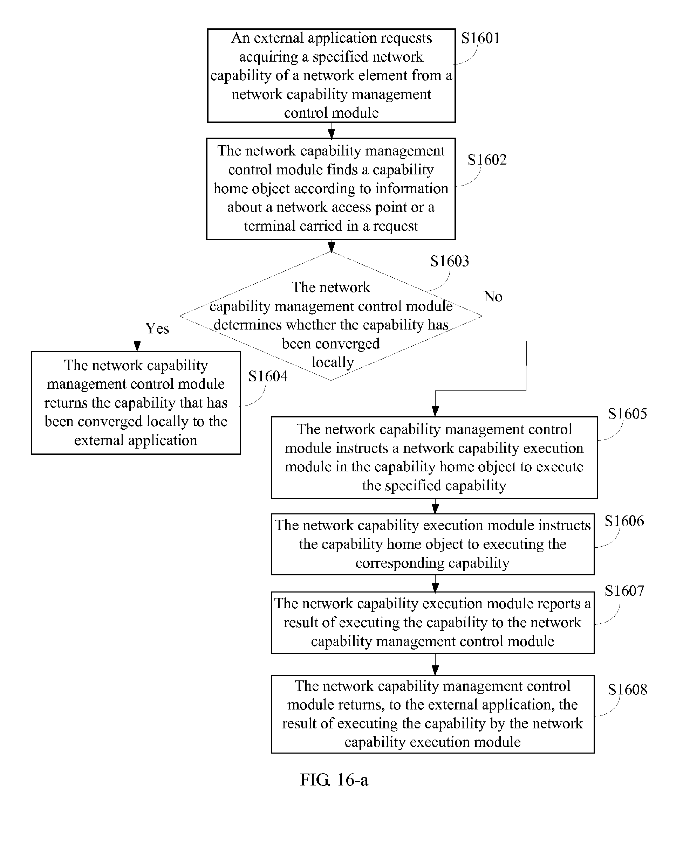

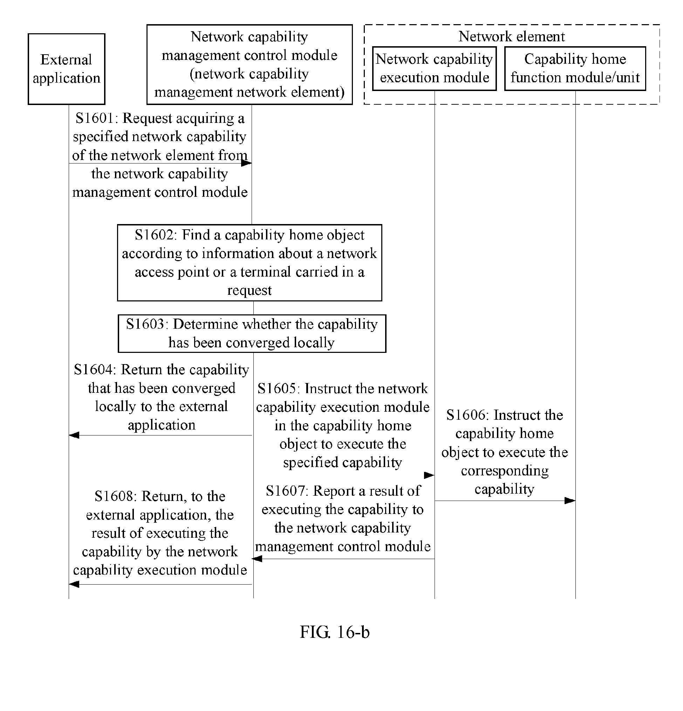

FIG. 16-a is a schematic flowchart of calling, by an external application, a specified capability on a network element according to an embodiment of the present invention; and
FIG. 16-b is a schematic flowchart of interaction between related network elements when an external application calls a specified capability on a network element according to an embodiment of the present invention.

### DESCRIPTION OF EMBODIMENTS

The following clearly and completely describes the technical solutions in the embodiments of the present invention with reference to the accompanying drawings in the embodiments of the present invention. Apparently, the described embodiments are merely a part rather than all of the embodiments of the present invention. All other embodiments obtained by a person skilled in the art based on the embodiments of the present invention shall fall within the protection scope of the present invention.

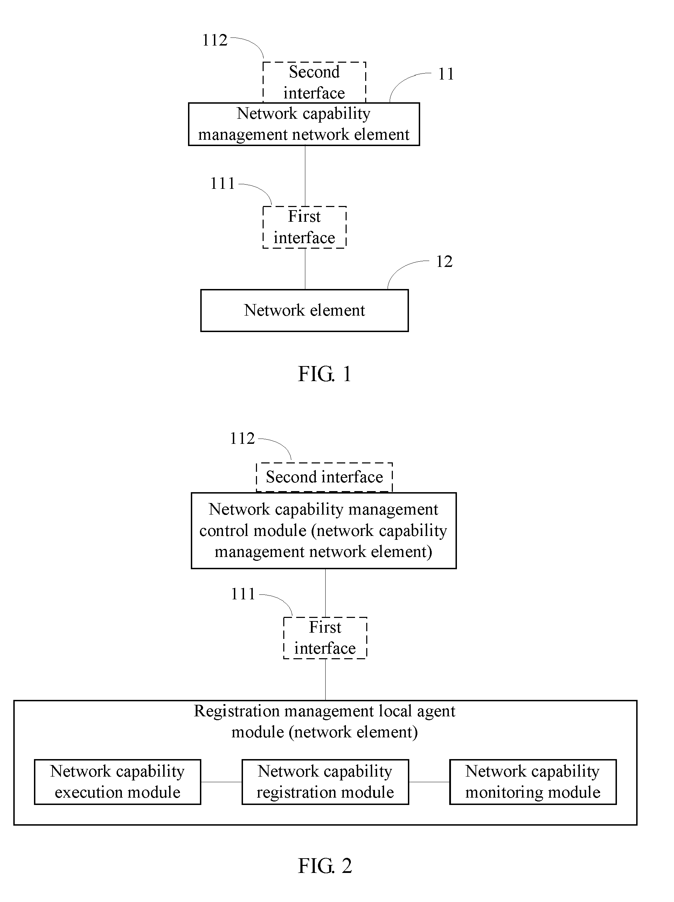

Referring to FIG. 1, which is a schematic structural diagram of a system for opening a network capability according to an embodiment of the present invention. For convenience of description, only parts related to the embodiment of the present invention are shown. The system for opening a network capability shown in FIG. 1 includes a network capability management network element 11 and at least one network element 12, where a first interface 111 is provided between the network capability management network element 11 and the network element 12; the network capability management network element 11 provides a second interface 112 for an external application; the network capability management network element 11 acquires a capability of the network element 12 over the first interface 111, and provides the capability of the network element 12 for the external application over the second interface 112; and the network element 12 is configured to provide the capability of the network element 12 for the network capability management network element 11 over the first interface 111, where the capability includes a capability that can be used by the external application (such as an Internet service or application), such as a network device resource, a computing resource, a logical resource, a function, a method, a parameter, and a network state.

In the embodiment of the present invention, the network includes an enterprise network, a mobile network established by a mobile operator, a fixed broadband access network, a backbone network, or the like. The network element 12 is a network element on the foregoing network and may be a physical network element, or may also be a function module/unit to which a hardware capability belongs or a function module/unit to which a software capability belongs on the physical network element. For example, for the mobile network, the network element 12 may be a base station, a base station controller, a radio network controller, or the like on the mobile network; and for the backbone network, the network element 12 may be a core network device on the backbone network, including a mobile switching center, a mobile management entity, or the like. The external application includes a service that relies on or can use internal resources of the foregoing network, and may be a service or a mobile application based on data communication, for example, an Internet service and an operator's proprietary service, including video, microblog, WEB, or the like. The first interface 111 is an interface over which the network capability management network element 11 interacts with the network element 12, and the second interface 112 is an interface provided by the network capability management network element 11 for the external application and used by the external application to call the capability of the network element 12. The first interface 111 or the second interface 112 may be a physical interface, or may also be a logical interface, for example, a function interface, a message interface, or the like. It should be noted that, if the first interface 111 or the second interface 112 is a physical interface, the first interface 111 or the second interface 112 may also include one or a plurality of logical interfaces.

The network capability management network element 11 may be a physical network element with a management function, or may also be a hardware function module/unit or a software function module/unit on the physical network element with a management function. The embodiment of the present invention does not limit a specific form of the network capability management network element 11. In principle, the network capability management network element 11 uniformly manages a registered capability of the network element 12 on the foregoing various networks; determines, according to information about an access point or an access terminal, an object to which a capability required by the access point or the access terminal belongs; finds the corresponding object to which the capability belongs when the second interface 112 is called externally; and executes a local capability by using the object to which the capability belongs. The network capability management network element 11 may further externally open the capability of the network element 12 and call an interface and a policy, and the like according to a certain rule and decision.

According to the system for opening a network capability provided in the foregoing embodiment of the present invention, a network capability management network element acquires a capability of a network element over a first interface, and provides the capability of the network element for an external application over a second interface. According to the method provided in the embodiments of the present invention, in one aspect, a resource and a network capability of each functional entity on a network are opened to an external application, which helps an operator progressively upgrade a device on the network to support opening of the network capability, convergence the network capability of each functional entity on the network also helps with calling performance of the network capability, and a part of network capabilities can be directly obtained without involving the entity on the network; in another aspect, a designer of mobile applications that are beyond the network can deeply understand the network capability of the network, and network problems that occur when a developed mobile application accesses the network can be reduced.

As mentioned above, the network element 12 may be a physical network element or a hardware function module/unit or a software function module/unit on the physical network element, and the network capability management network element 11 may be a physical network element with a management function or a hardware function module/unit or a software function module/unit on the physical network element with a management function. In the embodiment of the present invention, the network capability management network element 11 may be abstracted as a network capability management control module; the network element 12 may be abstracted as a function module related to capability opening, for example, a capability registration management local agent module as a network element; and the capability registration management local agent module is further subdivided into function modules such as a network capability execution module, a network capability registration module, and a network capability monitoring module according to a function provided by the network element 12, for example, acting on behalf of the network element 12 to register, with the network capability management network element 11, the capability of the network element, executing the capability of the network element, and monitoring the capability of the network element. The function modules, such as the network capability execution module, the network capability registration module, and the network capability monitoring module, interact with each other over a physical interface or a logical interface. An abstract structure of a system for opening a network capability provided in an embodiment of the present invention is shown in FIG. 2.

Basic functions of a network capability management control module include: uniformly managing a capability that a network element 12 registers with the network capability management control module by using a network capability registration module; determining, according to information about an access point or an access terminal, an object to which a capability required by the access point or the access terminal belongs; during external calling, finding the corresponding object to which the capability belongs; and executing a local capability by using a network capability execution module residing on the object to which the capability belongs. The network capability registration module provides a network entity such as a network element 12 (which includes an independent network element on a network, a device with an entity that operates independently, or a board on a device) with a registration function for network resource and capability opening. A capability home function module/unit on the network element 12 registers, with the network capability management control module and over a capability registration interface provided by the network capability registration module, a capability that can be provided by these capability home function module/unit residing on the network element 12, for example, network capability description, a network capability home object, a network capability execution interface, and a network capability monitoring interface. When the network capability management control module calls the capability execution interface registered by the capability home function module/unit on the network element 12, the network capability execution module executes the capability of the capability home function module/unit on the network element 12. The network capability monitoring module monitors, in the capability registration management local agent module, a state of the network capability by calling the network capability monitoring interface, that is, learns whether the capability registered by the capability home function module/unit on the network element 12 can be implemented.

Specifically, when the network capability management network element 11 acquires the capability of the network element 12 over the first interface 111 and the network element 12 provides the capability of the network element 12 for the network capability management network element 11 over the first interface 111, it may be that: after receiving, over the second interface 112, a calling request that the external application requests calling the capability of the network element 12, the network capability management network element 11 sends, according to the calling request and over the first interface 111, a network capability execution request used to request the network element 12 to execute the capability of the network element 12, and the network element 12 receives the network capability execution request over the first interface 111 and executes, according to the network capability execution request, the capability of the network element 12 that is requested by the network capability management network element 11. Further, the network element 12 is further configured to return, to the network capability management network element 11 and over the first interface 111, a result of executing the capability of the network element 12 that is requested by the network capability management network element 11. The network capability management network element 11 is further configured to receive, over the first interface 111, the result ofnetwork executing, by the network element 12, the capability of the network element 12 that is requested; and return, to the external application, a result of the calling request over the second interface 112 according to the result of executing the capability of the network element 12 that is requested.

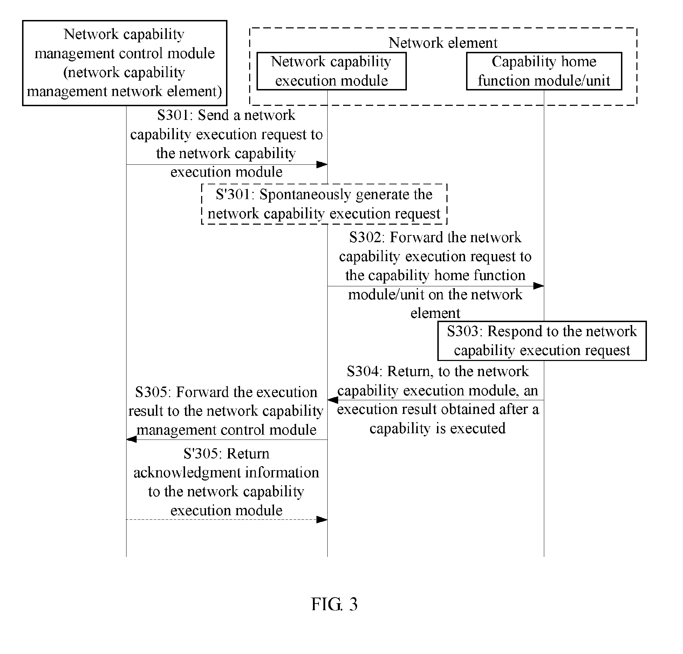

According to the abstraction, in FIG. 2, of the system for opening a network capability shown in FIG. 1, FIG. 3 shows a process in which a network capability management control module interacts with a network capability execution module of a network element 12 and a capability home function module/unit on the network element 12 when acquiring a capability of the capability home function module/unit on the network element 12. The process specifically includes S301 to S305, and is described as follows:
S301: A network capability management control module sends a network capability execution request to a network capability execution module.

In this embodiment, the network capability management control module sends, to the network capability execution module, the network capability execution request according to an actual requirement, for example, an external application requests calling a capability of a function module or unit on a network element 12, and spontaneously enables, according to a period, capability acquiring and a custom capability decision, so as to request the network capability execution module to execute a capability of a capability home function module/unit on the network element 12 or a specified capability.
S302: The network capability execution module forwards the network capability execution request to a capability home function module/unit on a network element.

It should be noted that, in this embodiment, the network capability execution request forwarded by the network capability execution module to the capability home function module/unit on the network element may be the network capability execution request from the network capability management control module, or may also be a network capability execution request spontaneously generated when the network capability execution module enables, according to a period, a periodic execution function, or may be a network capability execution request spontaneously generated after an execution function is enabled when a certain preset condition is met, for example, a state of the network element changes, a state of a related capability changes, or an execution result of a related capability meets a preset condition. That is, before S302, a possible execution step is spontaneously generating the network capability execution request (see S'301 in the figure).
S303: The capability home function module/unit on the network element responds to the network capability execution request.

That is, the capability home function module/unit on the network element executes, according to the network capability execution request, a capability of the network element.
S304: The capability home function module/unit on the network element returns, to the network capability execution module, an execution result obtained after a capability is executed.
S305: The network capability execution module forwards the execution result to the network capability management control module.

Optionally, the network capability management control module returns acknowledgment information to the network capability execution module (S'305).

For the system for opening a network capability shown in FIG. 1, the network element 12 is further configured to report a capability registration request to a network capability management network element 11 over a first interface 111; accordingly, the network capability management network element 11 is further configured to receive, over the first interface 111, the capability registration request reported by the network element 12, and registers the capability of the network element 12. After the network capability management network element 11 registers the capability of the network element 12, the capability of the network element 12 that is acquired by the network capability management network element 11 over the first interface 111 is the registered capability of the network element 12 that is acquired over the first interface 111.

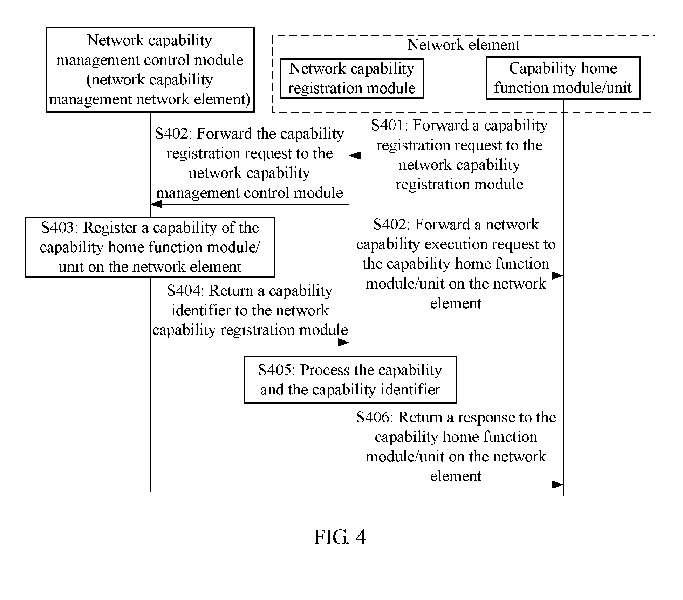

According to the abstraction, in FIG. 2, of the system for opening a network capability shown in FIG. 1, FIG. 4 shows a process in which a network capability management control module interacts with a network capability registration module of a network element 12 and a capability home function module/unit on the network element 12 when the capability home function module/unit on the network element 12 registers, with the network capability management control module and by using the network capability registration module, a capability of the capability home function module/unit. The process specifically includes S401 to S406, and is described as follows:
S401: A capability home function module/unit on a network element sends a capability registration request to a network capability registration module.

In the embodiment of the present invention, the capability home function module/unit on the network element 12 transmits the capability registration request to the network capability registration module by calling a network capability registration interface. The network capability registration interface may adopt a function interface, may also adopt a message interface, or may further adopt an interface mode such as a configuration file. The network capability registration interface supports that the function module/unit on the network element 12 transmits, to the network capability registration module, the following registration information, including network storage space (for example, CDN space and base station storage space), network information (for example, an access standard, an IP address, and an Internet egress address), a network state (for example, a base station state, a cell state, and a link state), and a network assurance capability (for example, QoS assurance and security assurance), and the like. Using a mode of using the function interface as the network capability registration interface as an example, parameters of the network capability registration interface may include: a network capability home object type, a network capability home object identifier, a network capability type, a network capability execution interface type, capability execution interface description, a network capability monitoring interface, and the like. These parameters are all registration information carried in the capability registration request, where the network capability home object type has several types including a gateway, a controller, a base station, a cell, a channel, a terminal, and the like; the network capability home object identifier includes a base station serial number, a cell serial number, and the like; the network capability type is classification of storage, a method, a parameter, a state, and the like; and the network capability execution interface type includes whether a network capability execution interface is a message interface, a function interface, and the like.
S402: The network capability registration module forwards the capability registration request to a network capability management control module.

That is, the network capability registration module reports, to the network capability management control module and over a first interface between the network capability registration module and the network capability management control module, the capability registration request sent by the function module or unit on the network element.
S403: The network capability management control module registers a capability of the capability home function module/unit on the network element.

That is, the network capability management control module stores the registration information reported by the network capability registration module, and assigns a capability identifier to the capability of the capability home function module/unit on the network element 12. In this embodiment, the capability identifier is uniformly assigned by the network capability management control module and may uniquely correspond to a certain capability in an entire system; or the capability identifier may also be combined with the capability home object identifier to uniquely determine a specific capability. The present invention does not limit a specific rule for defining the capability identifier. In the embodiment of the present invention, the capability identifier is used to determine a corresponding capability between the network capability management control module and the network capability registration module.
S404: The network capability management control module returns a capability identifier to the network capability registration module.
S405: The network capability registration module processes the capability and the capability identifier.

That is, the network capability registration module establishes a mapping relationship between the capability of the capability home function module/unit on the network element 12 and the capability identifier assigned by the network capability management control module to the capability, and stores this mapping relationship.
S406: The network capability registration module returns a response to the capability home function module/unit on the network element 12.

The response carries the capability identifier assigned by the network capability management control module to the capability that the capability home function module/unit on the network element 12 registers with the network capability registration module.

It should be noted that, the network capability registration module may return the capability identifier to the function module/unit on the network element 12, or may also not return the capability identifier to the function module/unit on the network element 12. When the network capability registration module does not return the capability identifier to the capability home function module/unit on the network element 12, a network capability execution interface and a network capability monitoring interface of the capability registered by the capability home function module/unit on the network element 12 need to be capable of corresponding to the capability. A locating method may be that: different capabilities use different interface names (function names or message IDs), and may be identified by parameters. When the network capability registration module returns the capability identifier to the capability home function module/unit on the network element 12, a network capability execution interface and a network capability monitoring interface of the capability registered by the capability home function module/unit on the network element 12 may locate the corresponding capability by using the identifier. For example, the network capability monitoring interface may be defined as GetAbilityStatus (ID); and this interface is applicable to all capabilities of the capability home function module/unit on the network element 12, and different capabilities are identified by IDs. It should be further noted that, in the capability registration interaction process shown in FIG. 4, the network capability management control module may also determine, according to a configuration or a registration situation of a similar capability or a related capability of another function module on the network element 12, whether to instruct the network capability monitoring module to enable monitoring on these capabilities.

After the network capability registration module completes, according to the capability registration process shown in FIG. 4, registration of the capability of the capability home function module/unit on the network element 12 with the capability management control module, the capability management control module learns the registration information of the capability of the capability home function module/unit on the network element 12. When required, for example, when an external application needs to call the capability of the capability home function module/unit on the network element 12, the capability management control module can acquire, according to the interaction process shown in FIG. 1, the capability of the capability home function module/unit on the network element 12, and provides, over a second interface 112, the capability of the capability home function module/unit on the network element 12 for the external application.

For the system for opening a network capability shown in FIG. 1, the network element 12 is further configured to monitor the capability of the network element 12, and report a current state of the capability of the network element 12 to the network capability management network element 11; accordingly, the network capability management network element 11 is further configured to interact with the network element 12 over the first interface 111, acquire the current state of the capability of the network element 12, and determine, according to the current state of the capability of the network element 12, whether to acquire, over the first interface 111, the capability of the network element 12. Further, the network capability management network element 11 is further configured to update a historical state of the capability of the network element 12 to the current state of the acquired capability.

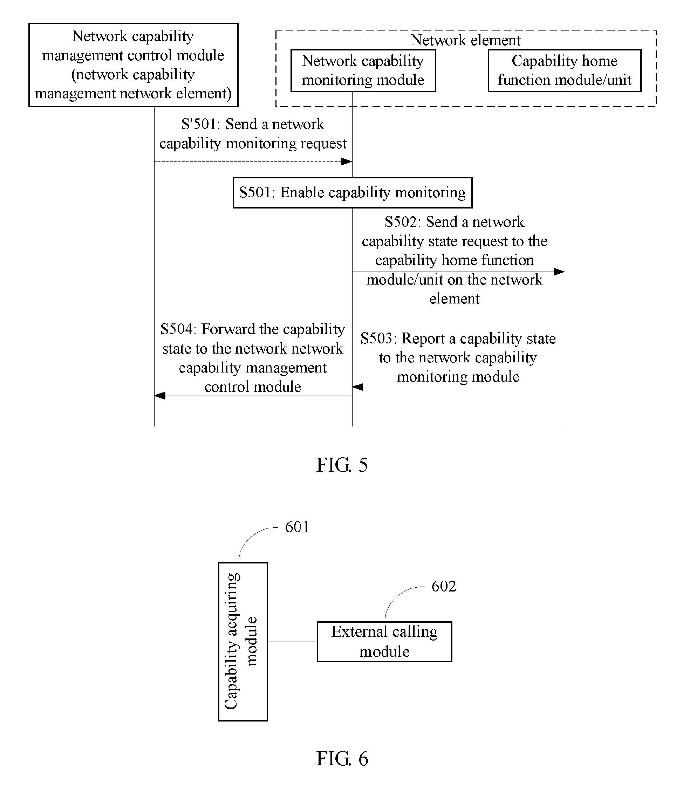

According to the abstraction, in FIG. 2, of the system for opening a network capability shown in FIG. 1, FIG. 5 shows a process in which a network capability management control module interacts with a network capability monitoring module of a network element 12 and a capability home function module/unit on the network element 12 when the network capability management control module monitors, by using the network capability monitoring module, a capability of the function module/unit on the network element 12. The process specifically includes S501 to S504, and is described as follows:
S501: A network capability monitoring module enables capability monitoring.

In the embodiment of the present invention, enabling of capability monitoring by the network capability monitoring module may be triggered by a network capability management control module sending a network capability monitoring request (S'501); or the network capability monitoring module may also spontaneously enable capability monitoring when a preset condition is met, for example, a set monitoring period is reached, a state of a network capability home object changes, a state of another capability changes, or an execution result of another capability meets a set condition.

It should be noted that, in the embodiment of the present invention, the network capability monitoring module enables capability monitoring, and a monitored object may be a capability that a capability home function module/unit on a network element registers with a network capability management control module by using a network capability registration module and according to the interaction process shown in FIG. 4, or may also be a capability that a capability management control module acquires from a capability home function module/unit on a network element by using a network capability execution module and according to the interaction process shown in FIG. 3. For the interaction process shown in FIG. 3, the network capability management control module may also determine, according to a result obtained by monitoring shown in FIG. 5, whether to initiate the interaction process; for example, when it is learnt by monitoring that a current state of a capability previously registered by the capability home function module/unit on the network element or a capability acquired from the capability home function module/unit on the network element is non-implementable, the network capability management control module may choose temporarily not to initiate a process of acquiring the capability of the capability home function module/unit on the network element from the capability home function module/unit on the network element, for example, not sending a network capability execution request to the network capability execution module until the current state of the capability of the capability home function module/unit on the network element is implementable.

The network capability monitoring module may enable monitoring on a specified single capability of the function module or unit on the network element 12, or may also monitor a specified group of capabilities of the capability home function module/unit on the network element 12. When enabling monitoring on the specified capability of the capability home function module/unit on the network element 12, the network capability monitoring module adds the specified capability to be monitored to a capability monitoring list.
S502: The network capability monitoring module sends a network capability state request to a capability home function module/unit on a network element.

That is, when a preset condition is met, for example, a set monitoring period is reached, a state of a network capability home object changes, a state of another capability changes, an execution result of another capability meets a set condition, or a network capability monitoring request sent by the network capability management control module is received, the network capability monitoring module requests, over a monitoring interface registered for the corresponding capability, the current state of the capability from the capability home function module/unit on the network element, for example, whether the capability can be implemented.
S503: The capability home function module/unit on the network element reports a capability state to the network capability monitoring module. S504: The network capability monitoring module forwards the capability state to a network capability management control module.

The network capability management control module acquires the current state of the capability of the capability home function module/unit on the network element. One of purposes is to determine, according to the current state of these capabilities, whether to acquire the capability of the network element 12 over the first interface 111. Therefore, after receiving the forwarded current state of the capability, the network capability management control module updates a historical state of the capability of the network element 12 to the current state of the acquired capability, as reference for whether to acquire the capability of the network element 12 over the first interface 111.

An embodiment of the present invention further provides a network capability management network element. The network capability management network element may be a physical device, and includes a first interface, a second interface, and a processor, where the first interface is an interface over which the network capability management network element interacts with a network element, the second interface is an interface over which the network capability management network element interacts with an external application, and the processor acquires a capability of the network element over the first interface, and provides the capability of the network element for the external application over the second interface. In this embodiment, a domain of the "external application" and the "network element" is the same as that defined in the foregoing embodiments, and details are not repeatedly described herein. Specifically, the processor of the network capability management network element receives, over the second interface, a calling request that the external application requests calling the capability of the network element; and sends, to the network element, over the first interface, and according to the calling request, a network capability execution request used to request the network element to execute the capability of the network element. Further, the processor of the network capability management network element further receives, over the first interface, a result of executing, by the network element, the capability of the network element that is requested; and returns, over the second interface and according to the result of executing the capability of the network element that is requested, a result of the calling request to the external application.

The processor of the network capability management network element further receives, over the first interface, a capability registration request reported by the network element, and registers the capability of the network element according to the capability registration request. After the capability of the network element is registered, the network capability management network element acquires the capability of the network element over the first interface, which is specifically that: the network capability management network element acquires, over the first interface, the registered capability of the network element.

The processor of the network capability management network element further interacts with the network element over the first interface, monitors the capability of the network element, and updates a historical state of the capability of the network element to a current state of the acquired capability.

Corresponding to the network capability management network element provided in the foregoing embodiment of the present invention, an embodiment of the present invention further provides a method for opening a network capability, mainly including: acquiring, by a network capability management network element, a capability of a network element; and providing, by the network capability management network element, the capability of the network element for an external application. The acquiring, by a network capability management network element, a capability of a network element includes: receiving, by the network capability management network element, a calling request that an external application calls the capability of the network element; sending, by the network capability management network element to the network element and according to the calling request, a network capability execution request used to request the network element to execute the capability of the network element. Further, the method further includes: receiving, by the network capability management network element, a result of networkexecuting, by the network element, the capability of the network element that is requested; and returning, by the network capability management network element, a result of the calling request according to the result of executing the capability of the network element that is requested.

The method for opening a network capability provided in the foregoing embodiment of the present invention further includes: registering, by the network capability management network element, the capability of the network element according to a capability registration request by receiving the capability registration request reported by the network element.

The method for opening a network capability provided in the foregoing embodiment of the present invention further includes: monitoring, by the network capability management network element, the capability of the network element by interacting with the network element; specifically, updating, by the network element network capability management, a historical state of the capability of the network element to the current state of the acquired capability.

It should be noted that, in the method for opening a network capability provided in the foregoing embodiment of the present invention, when the network capability management network element is a physical device, the method may be implemented by using a processor and an interface in the network capability management network element. For the network capability management network element acquiring the capability of the network element and providing the capability of the network element for the external application, specific implementation may be that, the processor in the network capability management network element acquires the capability of the network element over a first interface, and provides the capability of the network element for the external application over a second interface.

For the network capability management network element receiving the calling request that the external application requests calling the capability of the network element and sending, to the network element and according to the calling request, the network capability execution request used to request the network element to execute the capability of the network element, specific implementation may be that, the processor of the capability management network element receives, over a second interface, the calling request that the external application requests calling the capability of the network element; and sends, to the network element, over a first interface, and according to the calling request, the network capability execution request used to request the network element to execute the capability of the network element.

For the network capability management network element receiving the result of executing, by the network element, the capability of the network element that is requested and returning, to the external application, the result of the calling request according to the result of executing the capability of the network element that is requested, specific implementation may be that, the processor of the network capability management network element receives, over a first interface, the result of the network element executing the capability of the network element that is requested, and returns the result of the calling request to the external application over the second interface according to the result of executing the capability of the network element that is requested.

Similarly, for the network capability management network element registering the capability of the network element according to the capability registration request by receiving the capability registration request reported by the network element, specific implementation may be that, the processor of the network capability management network element receives, over the first interface, the capability registration request reported by the network element, and registers the capability of the network element according to the capability registration request; for the network capability management network element monitoring the capability of the network element by interacting with the network element and the network capability management updating the historical state of the capability of the network element to the current state of the acquired capability, specific implementation may be that, the processor of the network capability management network element interacts with the network element over the first interface, monitors the capability of the network element, and updates the historical state of the capability of the network element to the current state of the acquired capability.

Corresponding to the foregoing embodiments of the method for opening a network capability and the network capability management network element, an embodiment of the present invention further provides an apparatus for opening a network capability shown in FIG. 6, including a capability acquiring module 601 and an external calling module 602, where:
the capability acquiring module 601 is configured to acquire a capability of a network element; and
the external calling module 602 is configured to provide, for an external application, the capability of the network element that is acquired by the capability acquiring module 601.

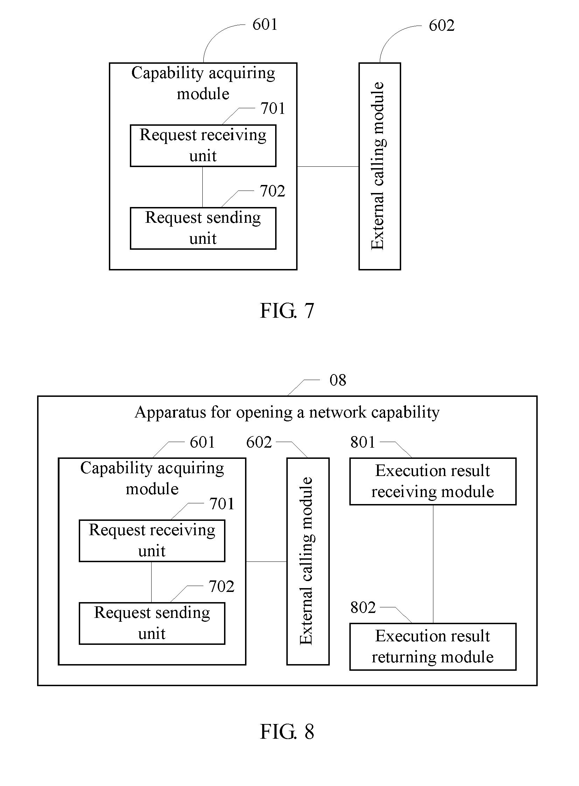

The capability acquiring module 601 shown in FIG. 6 may further include a request receiving unit 701 and a request sending unit 702. As shown in FIG. 7, another embodiment of the present invention provides an apparatus for opening a network capability, where:
the request receiving unit 701 is configured to receive, from an external application, a calling request that requests calling a capability of a network element; and
the request sending unit 702 is configured to send, to the network element and according to the calling request received by the request receiving unit 701, a network capability execution request that requests the network element to execute the capability of the network element.

The apparatus for opening a network capability shown in FIG. 7 may further include an execution result receiving module 801 and an execution result returning module 802. As shown in FIG. 8, another embodiment of the present invention provides an apparatus 08 for opening a network capability, where:
the execution result receiving module 801 is configured to receive a result of a network element executing a capability of the network element that is requested; and
the execution result returning module 802 is configured to return, according to the result of executing the capability of the network element that is requested, a result of the calling request to an external application.

The apparatus for opening a network capability shown in FIG. 6 may further include a registration module 901. As shown in FIG. 9, another embodiment of the present invention provides an apparatus for opening a network capability, where the registration module 901 is configured to receive a capability registration request reported by a network element, and register, according to the capability registration request, a capability of the network element.

The apparatus for opening a network capability shown in FIG. 6 or FIG. 9 may further include a monitoring module 1001. As shown in FIG. 10-a or FIG. 10-b, another embodiment of the present invention provides an apparatus for opening a network capability, where the monitoring module 1001 is configured to monitor a capability of a network element by interacting with the network element.

It should be noted that, the apparatus for opening a network capability shown in FIG. 6 to FIG. 10 may be a function module/unit of the processor in the embodiment of the network capability management network element, or specific implementation of the processor in the embodiment of the network capability management network element, or a main implementation entity for executing the foregoing method for opening a network capability. Interaction between the apparatus for opening a network capability shown in FIG. 6 to FIG. 10 or a function module/unit in the apparatus and a network element may be performed over the first interface 111 provided in the foregoing embodiments, and interaction with an external application may be performed over the second interface 112. For a detailed interaction method, reference may be made to the foregoing method embodiments, and details are not repeatedly described herein.

An embodiment of the present invention further provides a network element. The network element may be a physical device on a certain network, and the network element includes a first interface and a processor, where the first interface is an interface over which the network element interacts with a network capability management network element, and the processor is configured to provide a capability of the network element for the network capability management network element over the first interface. In this embodiment, a domain of the "first interface" and the "network capability management network element" is the same as a domain of the "first interface" and the "network capability management network element" in the foregoing embodiments, and details are not repeatedly described herein.

Specifically, the processor of the network element is configured to receive, over the first interface, a network capability execution request sent by the network capability management network element; and execute, according to the network capability execution request, the capability of the network element that is requested. Further, the processor of the network element is further configured to return, to the network capability management network element and over the first interface, a result of executing the capability of the network element that is requested.

The processor of the network element is further configured to report a capability registration request to the network capability management network element over the first interface; and is further configured to monitor the capability of the network element, and report a current state of the capability of the network element to the network capability management network element.

Corresponding to the network element provided in the embodiment of the present invention, another embodiment of the present invention provides a method for opening a network capability, mainly including: providing, by a network element, a capability of the network element for a network capability management network element. Specifically, the network element receives a network capability execution request sent by the network capability management network element, and executes, according to the network capability execution request, the capability of the network element that is requested; further, the network element returns, to the network capability management network element, a result of executing the capability of the network element that is requested.

The method for opening a network capability provided in the another embodiment of the present invention further includes: reporting, by the network element, the capability registration request to the network capability management network element.

The method for opening a network capability provided in the another embodiment of the present invention further includes: monitoring, by the network element, the capability of the network element, and reporting a current state of the capability of the network element to the network capability management network element.

It should be noted that, in the method for opening a network capability provided in the another embodiment of the present invention, the network element is a physical device, and the method may be implemented by using a processor and an interface in the network element. For the network element providing the capability of the network element for the network capability management network element, specific implementation may be that, the processor of the network element provides, over a first interface, the capability of the network element for the network capability management network element. Specifically, the processor of the network element receives, over the first interface, a network capability execution request sent by the network capability management network element, and executes, according to the network capability execution request, the capability of the network element that is requested; further, the processor of the network element returns, to the network capability management network element and over the first interface, a result of executing the capability of the network element that is requested.

Similarly, for the network element reporting the capability registration request to the network capability management network element and the network element monitoring the capability of the network element and reporting the current state of the capability of the network element to the network capability management network element, specific implementation may be that, the processor of the network element reports the capability registration request to the network capability management network element over the first interface, monitors the capability of the network element, and reports the current state of the capability of the network element to the network capability management network element.

Corresponding to the foregoing embodiments of the method for opening a network capability and the network element, an embodiment of the present invention further provides an apparatus 11 for opening a network capability as shown in FIG. 11, mainly including a capability providing module 1101. The capability providing module 1101 is configured to provide a capability of a network element for a network capability management network element.

The capability providing module 1101 shown in FIG. 11 may include a receiving unit 1201 and an executing unit 1202. As shown in FIG. 12, another embodiment of the present invention provides an apparatus 12 for opening a network capability, where:
the receiving unit 1201 is configured to receive a network capability execution request sent by a network capability management network element; and
the executing unit 1202 is configured to execute, according to the network capability execution request received by the receiving unit 1201, a capability of the network element that is requested.

The apparatus 12 for opening a network capability shown in FIG. 12 may further include a result returning module 1301. As shown in FIG. 13, another embodiment of the present invention provides an apparatus for opening a network capability, where the result returning module 1301 is configured to return, to a network capability management network element, a result of executing a capability of a network element that is requested.

The apparatus for opening a network capability shown in FIG. 11 may further include a registration request reporting module 1401. As shown in FIG. 14, another embodiment of the present invention provides an apparatus for opening a network capability, where the registration request reporting module 1401 is configured to report a capability registration request to the network capability management network element.

The apparatus for opening a network capability shown in FIG. 11 or FIG. 14 may further include a capability monitoring module 1501. As shown in FIG. 15-a or FIG. 15-b, another embodiment of the present invention provides an apparatus for opening a network capability, where the capability monitoring module 1501 is configured to monitor a capability of a network element, and report a current state of the capability of the network element to a network capability management network element.

It should be noted that, the apparatus for opening a network capability shown in FIG. 11 to FIG. 15 may be a function module/unit of the processor in the embodiment of the network element, specific implementation of the processor in the embodiment of the network element, or a main implementation entity for executing the foregoing method for opening a network capability. Interaction between the apparatus for opening a network capability shown in FIG. 11 to FIG. 15 or a function module/unit in the apparatus and a network capability management network element may be performed over the first interface 111 provided in the foregoing embodiments. For a detailed interaction method, reference may be made to the foregoing method embodiments, and details are not repeatedly described herein.

The following describes the system and the method for opening a network capability provided in the embodiments of the present invention by using that a specified capability of a capability home function module/unit on a network element is called externally as an example. Referring to FIG. 16-a, which is a flowchart of calling, by an external application, a specified capability on a network element according to an embodiment of the present invention. Corresponding to FIG. 16-a, FIG. 16-b is a process of interaction between an external application, a network capability management control module, a network capability execution module, and a capability home function module/unit on a network element, which is described as follows:
S1601: An external application requests obtaining a specified network capability of a network element from a network capability management control module.

The request carries information about a network access point or a terminal.
S1602: The network capability management control module finds a capability home object according to information about a network access point or a terminal carried in the request.
S1603: The network capability management control module determines whether the capability has been converged locally.

As described in the foregoing embodiments, because the network capability management control module may spontaneously request calling a network capability of a capability home object, that is, the network element or a capability home function module/unit on the network element, before the external application initiates a request, the network capability management control module may have locally converged the capability that needs to be called by the external application. Therefore, the network capability management control module can determine whether the capability has been converged locally after finding, according to the information about the network access point or the terminal carried in the request, the capability home object, that is, the network element or the capability home function module/unit on the network element. If a determination result is whether the capability has been converged locally, the process goes to S1604; otherwise, the process goes to S1605.
S1604: The network capability management control module returns the capability that has been converged locally to the external application.
S1605: The network capability management control module instructs a network capability execution module in the capability home object to execute the specified capability.

That is, the network capability management control module instructs, over the first interface mentioned in the foregoing embodiments, the network capability execution module in the capability home object to execute the specified capability.
S1606: The network capability execution module instructs the capability home object to execute the corresponding capability.

That is, the network capability execution module instructs, over a network capability execution interface registered for the corresponding capability, the capability home object to execute the corresponding capability.
S1607: The network capability execution module reports a result of executing the capability to the network capability management control module.
S1608: The network capability management control module returns, to the external application, the result of executing the capability by the network capability execution module.

It should be noted that content such as information exchange between the modules/units of the foregoing apparatus and an execution process is based on a same idea as the method embodiments of the present invention, and therefore brings a same technical effect as the method embodiments of the present invention. For detailed content, reference may be made to the description in the method embodiments of the present invention, and details are not repeatedly described herein.

A person of ordinary skill in the art may understand that all or a part of the steps of the methods in the embodiments may be implemented by a program instructing relevant hardware, for example, one or a plurality of or all of the following methods:
Method 1: acquiring, by a network capability management network element, a capability of a network element; and providing, by the network capability management network element, the capability of the network element for an external application.
Method 2: providing, by a network element, a capability of the network element for a network capability management network element.

A person of ordinary skill in the art may understand that all or a part of the steps of the methods in the embodiments may be implemented by a program instructing relevant hardware. The program may be stored in a computer readable storage medium. The storage medium may include: a read-only memory (ROM, Read-Only Memory), a random access memory (RAM, Random Access Memory), a magnetic disc, an optical disc, or the like.

The foregoing describes, in detail, the system and the method for opening a network capability, and a related network element that are provided in the embodiments of the present invention. In this specification, specific examples are used to describe the principle and implementation manners of the present invention, and the description of the foregoing embodiments is merely intended to help understand the method and core idea of the present invention. Meanwhile, according to the idea of the present invention, a person of ordinary skill in the art may make modifications to the specific implementation manners and the application scope. To sum up, the content of this specification shall not be construed as a limitation on the present invention.

## Claims

1. A system for opening a network capability, comprising:
a network capability management network element and at least one network element, wherein a first interface is provided between the network capability management network element and the network element, and the network capability management network element provides a second interface for the external application;
the network capability management network element is configured to acquire a capability of the network element over the first interface, and provide the capability of the network element for the external application over the second interface; and
the network element is configured to provide the capability of the network element for the network capability management network element over the first interface.

2. The system according to claim 1, wherein the network capability management network element is specifically configured to receive, over the second interface, a calling request that the external application requests calling the capability of the network element; and send, over the first interface and according to the calling request, a network capability execution request used to request the network element to execute the capability of the network element; and
the network element is specifically configured to receive the network capability execution request over the first interface; and execute, according to the network capability execution request, the capability of the network element that is requested by the network capability management network element.

3. The system according to claim 2, wherein the network element is further configured to return, over the first interface and to the network capability management network element, a result of executing the capability of the network element that is requested by the network capability management network element; and
the network capability management network element is further configured to receive, over the first interface, the result of the network element executing the capability of the network element that is requested; and return a result of the calling request to the external application over the second interface and according to the result of executing the capability of the network element that is requested.

4. The system according to claim 1, wherein the network element is further configured to report a capability registration request to the network capability management network element over the first interface; and
the network capability management network element is further configured to receive, over the first interface, the capability registration request reported by the network element, and register the capability of the network element, wherein:
the network capability management network element is configured to acquire a capability of the network element over the first interface is specifically that:
the network capability management network element is configured to acquire, over the first interface, the registered capability of the network element.

5. The system according to claim 1, wherein the network element is further configured to monitor the capability of the network element, and report a current state of the capability of the network element to the network capability management network element; and
the network capability management network element is further configured to: interact with the network element over the first interface, acquire the current state of the capability of the network element, and determine, according to the current state of the capability of the network element, whether to acquire the capability of the network element over the first interface.

6. The system according to claim 5, wherein the network capability management network element is further configured to update a historical state of the capability of the network element to the current state of the acquired capability.

7. A network capability management network element, wherein the network capability management network element comprises a first interface, a second interface, and a processor, the first interface is an interface over which the network capability management network element interacts with a network element, and the second interface is an interface over which the network capability management network element interacts with an external application; and
the processor acquires a capability of the network element over the first interface, and provides the capability of the network element for the external application over the second interface.

8. The network capability management network element according to claim 7, wherein the processor receives, over the second interface, a calling request that the external application requests calling the capability of the network element; and sends, over the first interface and according to the calling request, a network capability execution request used to request the network element to execute the capability of the network element.

9. The network capability management network element according to claim 8, wherein the processor further receives, over the first interface, a result of network executing, by the network element, the capability of the network element that is requested; and returns, over the second interface and according to the result of executing the capability of the network element that is requested, a result of the calling request to the external application.

10. The network capability management network element according to claim 7, wherein the processor further receives, over the first interface, a capability registration request reported by the network element, and registers the capability of the network element according to the capability registration request; and that the network capability management network element is configured to acquire the capability of the network element over the first interface is specifically that: the network capability management network element is configured to acquire, over the first interface, the registered capability of the network element.

11. The network capability management network element according to claim 7, wherein the processor further interacts with the network element over the first interface and monitors the capability of the network element.

12. The network capability management network element according to claim 11, wherein the processor updates a historical state of the capability of the network element to a current state of the acquired capability.

13. A network element, wherein the network element comprises a first interface and a processor, wherein the first interface is an interface over which the network element interacts with a network capability management network element; and
the processor provides, over the first interface, a capability of the network element for the network capability management network element.

14. The network element according to claim 13, wherein the processor receives, over the first interface, a network capability execution request sent by the network capability management network element, and executes, according to the network capability execution request, the capability of the network element that is requested.

15. The network element according to claim 14, wherein the processor further returns, over the first interface, a result of executing the capability of the network element that is requested to the network capability management network element.

16. The network element according to claim 13, wherein the processor further reports a capability registration request to the network capability management network element over the first interface.

17. The network element according to claim 13, wherein the processor further monitors the capability of the network element, and reports a current state of the capability of the network element to the network capability management network element.

18. A method for opening a network capability, wherein the method comprises:
acquiring, by a network capability management network element, a capability of a network element; and
providing, by the network capability management network element, the capability of the network element for an external application.

19. The method according to claim 18, wherein the acquiring, by a network capability management network element, a capability of a network element comprises:
receiving, by the network capability management network element, a calling request that the external application requests calling the capability of the network element; and
sending, by the network capability management network element to the network element and according to the calling request, a network capability execution request used to request the network element to execute the capability of the network element.

20. The method according to claim 19, wherein the method further comprises:
receiving, by the network capability management network element, a result of network executing, by the network element, the capability of the network element; and
returning, by the network capability management network element and according to the result of executing the capability of the network element that is requested, a result of the calling request to the external application.

21. The method according to claim 18, wherein the method further comprises:
registering, by the network capability management network element and according to a capability registration request, the capability of the network element by receiving the capability registration request reported by the network element.

22. The method according to claim 18, wherein the method further comprises:
monitoring, by the network capability management network element, the capability of the network element by interacting with the network element.

23. The method according to claim 22, wherein the monitoring, by the network element network capability management network element, the capability of the network element comprises: updating, by the network element capability management, a historical state of the capability of the network element to a current state of the acquired capability.

24. A method for opening a network capability, wherein the method comprises:
providing, by a network element, a capability of the network element for a network capability management network element.

25. The method according to claim 24, wherein the providing, by a network element, a capability of the network element for a network capability management network element comprises:
receiving, by the network element, a network capability execution request sent by the network capability management network element; and executing, according to the network capability execution request, the capability of the network element that is requested.

26. The method according to claim 25, wherein the method further comprises:
returning, by the network element, a result of executing the capability of the network element that is requested to the network capability management network element.

27. The method according to claim 24, wherein the method further comprises:
reporting, by the network element, a capability registration request to the network capability management network element.

28. The method according to claim 24, wherein the method further comprises:
monitoring, by the network element, the capability of the network element; and reporting a current state of the capability of the network element to the network capability management network element.
